Europäisches Patentamt

European Patent Office

Office européen des brevets

(19)

(11) Numéro de publication: **0 187 554**
**B1**

(12) **FASCICULE DE BREVET EUROPÉEN**

(45) Date de publication du fascicule du brevet:
**04.10.89**

(51) Int. Cl.⁴: **F 16 J 15/12**

(21) Numéro de dépôt: **85402082.3**

(22) Date de dépôt: **28.10.85**

(54) **Dispositif d'étanchéité plat.**

(30) Priorité: **29.10.84 FR 8416492**

(43) Date de publication de la demande:
**16.07.86 Bulletin 86/29**

(45) Mention de la délivrance du brevet:
**04.10.89 Bulletin 89/40**

(84) Etats contractants désignés:
**DE IT SE**

(56) Documents cité:
**DE-A-2 048 569**
**FR-A-1 421 459**
**US-A-3 536 806**

(73) Titulaire: **HUTCHINSON, 2 rue Balzac, F-75008 Paris (FR)**

(72) Inventeur: **Braut, Patrick, 31, rue Ste Emerance La Pouèze, F-49370 Le Louroux Beconnais (FR)**
Inventeur: **Crapart, René, Ste Gemme d'Andigne, F-49500 Segre (FR)**

(74) Mandataire: **Picard, Jean- Claude Georges, Cabinet Plasseraud 84, rue d'Amsterdam, F-75009 Paris (FR)**

EP 0 187 554 B1

## Description

La présente invention concerne un dispositif d'étanchéité plat, destiné à être comprimé entre les plans de jonction de deux pièces devant être fixées l'une sur l'autre de façon étanche, ce dispositif comprenant un joint en élastomère, caoutchouc ou autre matériau à faible module d'élasticité en compression, et dont le rôle est essentiellement d'assurer l'étanchéité entre lesdites pièces, ce joint étant adhérisé par un de ses bords sur le bord aminci d'une armature rigide dont une partie de serrage se trouve en saillie latérale par rapport audit joint, l'épaisseur de cette partie de serrage étant inférieure à celle du joint à l'état de repos.

Il pourra s'agir notamment, mais non exclusivement, d'un dispositif d'étanchéité destiné à être inséré entre les plans de jonction rigides des deux parties, fixées l'une sur l'autre, d'un carter de boîte de vitesses ou analogue, le dispositif d'étanchéité ayant pour rôle d'assurer l'étanchéité de la jonction.

L'avantage essentiel de tels dispositifs est que l'écrasement maximum du joint sera automatiquement limité par la mise en contact dur de la partie de serrage de l'armature entre les deux plans de jonction. En d'autres termes, l'épaisseur de la partie de serrage de ladite armature rigide déterminera l'épaisseur minimale du joint après serrage. Ce serrage pourra donc être considérablement augmenté, sans aucun inconvénient pour ce joint.

Le document DE-A-2 048 569 décrit un tel joint.

Le but de la présente invention est de perfectionner ces joints et de rendre le dispositif indémontable, en assurant une solidarisation optimale entre le joint et l'armature; en outre, aucune partie du joint ne doit être pincée entre l'armature rigide et les plans de jonction des deux pièces à relier.

A cet effet, un dispositif d'étanchéité plat du type général décrit au début est, conformément à la présente invention, essentiellement caractérisé en ce que ledit bord aminci de l'armature rigide a des dents.

Un dispositif d'étanchéité plat établi sur ces principes pourra être réalisé dans toutes les dimensions et selon toutes les modalités appropriées, et en utilisant tous les matériaux adaptés aux conditions de leur utilisation (températures, contraintes mécaniques, nature des fluides pouvant venir en contact avec le joint, etc.).

Selon un mode de réalisation avantageux de l'invention, surtout lorsque les plans de jonction sont de grandes dimensions, on peut encore prévoir que la partie de serrage de ladite armature rigide porte des nervures de rigidification.

Des modes d'exécution de l'invention vont maintenant être décrits à titre d'exemples nullement limitatifs, avec référence aux figures du dessin annexé dans lequel:

- la figure 1 est une vue en coupe transversale partielle d'un dispositif d'étanchéité plat annulaire réalisé conformément à l'invention;
- la figure 2 est une vue analogue du dispositif d'étanchéité, mais monté serré entre les brides de serrage des deux parties d'un carter de boîte de vitesses ou analogue;
- la figure 3 montre en plan une forme possible de l'armature rigide (dont la forme générale correspond à celle des plans de jonction); et
- la figure 4 est une vue analogue à celle de la figure 1, montrant une armature rigide à nervures.

Sur les différentes figures, on a référencé en 1 le joint annulaire, c'est-à-dire la partie essentielle à laquelle incombe le rôle de garantir l'étanchéité entre deux pièces, en l'occurrence les brides de serrage 2 des deux parties d'un carter, par exemple pour boîte de vitesses d'un véhicule automobile.

Ce joint, en élastomère de tout type approprié, présente éventuellement un ou plusieurs bourrelets périphériques 3, qui agissent comme des joints toriques, en épousant les éventuelles déformations des plans de jonction des brides 2.

Le joint 1 est fixé, par adhérisation de tout le pourtour de son bord extérieur 4, sur le bord d'une armature rigide annulaire 5, avantageusement métallique, par l'intermédiaire de dents amincies 6 que comporte le bord intérieur de cette dernière.

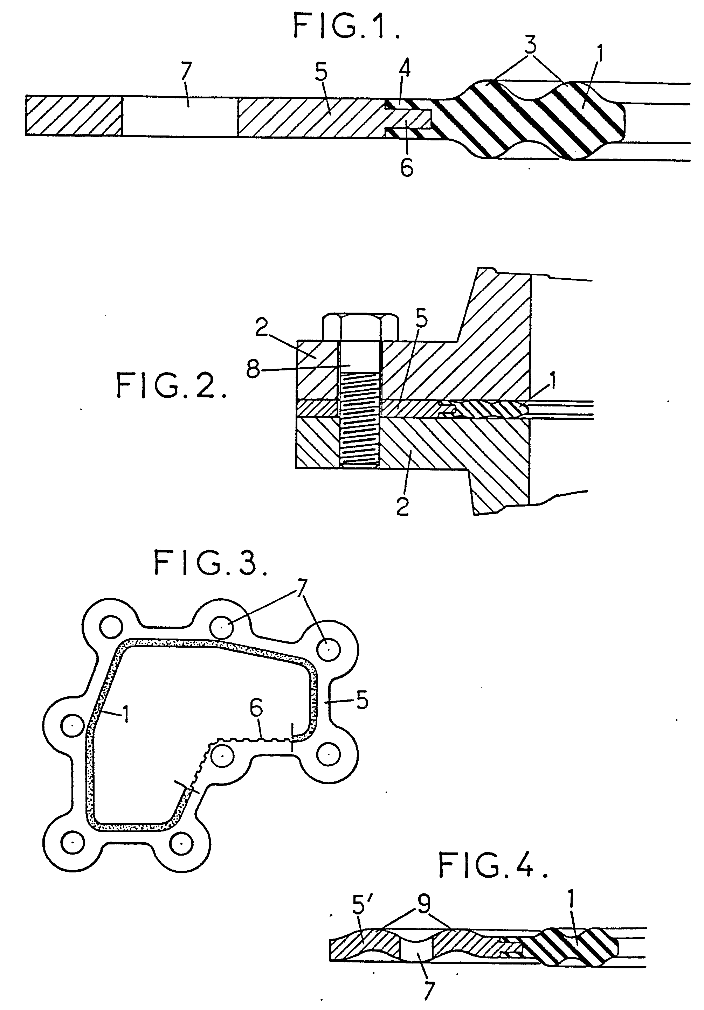

Comme on le voit sur les figures, la partie de serrage de cette armature 5 a une épaisseur sensiblement inférieure à celle du joint 1 lorsqu'il est en position de repos (figure 1), et elle se trouve en saillie latérale (vers l'extérieur) par rapport à ce joint.

L'armature 5 est percée de trous 7 pour le passage des boulons de fixation 8 qui permettront de serrer les deux brides 2 l'une contre l'autre.

Grâce aux dispositions qui viennent d'être décrites, on voit que l'on peut serrer au maximum les deux brides 2 jusqu'au contact métal-métal des deux plans de jonction des brides 2 sur la partie de serrage de l'armature 5, et ceci sans risquer de provoquer un écrasement excessif du joint, puisque l'épaisseur de celui-ci ne pourra être inférieure à celle de cette partie de serrage de l'armature. Ce joint, et notamment par ses bourrelets 3, pourra ainsi assurer une excellente étanchéité entre les deux parties du carter.

L'armature rigide 5 permet aussi, on le conçoit, un montage simple et rapide sur la bride 2 inférieure, la rigidité qu'elle confère à l'ensemble permettant même une mise en place automatique.

Lorsque les plans de jonction sont de grandes dimensions, on peut rigidifier l'armature 5' par des nervures périphériques telles que celles qui ont été représentées en 9 à la figure 4.

L'invention pourrait s'appliquer de manière semblable à tout type de joint, de forme autre qu'annulaire. Elle pourrait en effet s'appliquer à des joints ouverts ou même à des joints droits.

Dans les exemples qui ont été décrits, la partie de serrage de l'armature métallique 5 est située à l'extérieur du joint 1. Il n'est pas à exclure toutefois, au moins dans certaines applications, que cette partie de l'armature soit au contraire située à l'intérieur du joint, les résultats premiers de l'invention restant les mêmes.

**Revendications**

1. Dispositif d'étanchéité plat destiné à être comprimé entre les plans de jonction de deux pièces (2) devant être fixées l'une sur l'autre de façon étanche, ce dispositif comprenant un joint (1) en matériau à faible module d'élasticité en compression, dont le rôle est d'assurer l'étanchéité entre lesdites pièces, dans lequel le joint (1) est adhérisé par un (4) de ses bords sur le bord aminci d'une armature rigide (5) dont une partie de serrage se trouve en saillie latérale par rapport audit joint (1), l'épaisseur de cette partie de serrage étant inférieure à celle du joint (1) à l'état de repos, caractérisé en ce que ledit bord aminci de l'armature rigide a des dents (6).

2. Dispositif selon la revendication 1, caractérisé en ce que le joint (1) comporte au moins un bourrelet périphérique (3).

3. Dispositif selon la revendication 1 ou 2, caractérisé en ce que la partie de serrage de l'armature rigide (5') porte des nervures périphériques de rigidification (9).

**Patentansprüche**

1. Flachdichtung, die zwischen den Verbindungsebenen von zwei dicht aneinander zu befestigenden Werkstücken verspannt wird und aus einer Dichtung (1) aus einem Material mit kleinem Druckelastizitätsmodul besteht, die die Aufgabe hat, die Abdichtung zwischen den Werkstücken sicherzustellen, wobei der eine Rand (4) der Dichtung (1) mit dem dünner ausgebildeten Rand einer starren Einlage (5) durch eine Haftverbindung verbunden ist, ein Abschnitt der verspannten Einlage als seitlicher Vorsprung in bezug auf die Dichtung ausgebildet ist und die Stärke dieses Abschnittes geringer ist als die der Dichtung im unbeanspruchten Zustand, dadurch gekennzeichnet, daß der dünner ausgebildete Rand der starren Einlage Zähne (6) aufweist.

2. Flachdichtung nach Anspruch 1 dadurch gekennzeichnet, daß die Dichtung (1) wenigstens eine umlaufende Wulst (3) aufweist.

3. Flachdichtung nach Anspruch 1 oder 2, dadurch gekennzeichnet, daß die verspannte Einlage (5') mit peripheren Verstärkungsrippen (9) versehen ist.

**Claims**

1. Flat sealing device intended for being compressed between the junction planes of two parts (2) which are to be attached one onto the other in a tight manner, this device comprising a gasket or seal (1) out of a material featuring a low modulus of elasticity in compression, whose purpose is to ensure the tightness between said parts, in which the seal (1) is bonded by one (4) of its edges on the weakened edge of a rigid armature (5), one clamping part of which projects laterally with respect to said seal (1), whereby the thickness of this clamping part is lower than the one of the seal (1) at rest, characterized in that said weakened edge of the rigid armature is provided with teeth (6).

2. Device according to claim 1, characterized in that the seal (1) comprises at least a peripheral flange (3).

3. Device according to claim 1 or 2, characterized in that the clamping part of the rigid armature (5') is provided with peripheral stiffening ribs (9).

EP 0 187 554 B1

# FIG.1.

# FIG.2.

# FIG.3.

# FIG.4.

1